# EUROPEAN PATENT SPECIFICATION

(11) **EP 2 514 620 B1**
(45) Date of publication and mention of the grant of the patent: **30.12.2020**
(21) Application number: 10837374.7
(22) Date of filing: 05.11.2010
(51) Int. Cl.: B60K 6/383, B60K 6/48, B60K 6/54, B60W 10/30, B60W 20/00, B60K 17/08, B60L 1/00, B60L 50/16

(54) **ACCESSORY DRIVE MECHANISM FOR HYBRID VEHICLE**
ZUSATZANTRIEBSMECHANISMUS FÜR EIN HYBRIDFAHRZEUG
MÉCANISME D'ENTRAÎNEMENT D'ACCESSOIRES POUR VÉHICULE HYBRIDE

(30) Priority: 18.12.2009 JP 2009287699; 18.12.2009 JP 2009287718
(43) Date of publication of application: 24.10.2012
(73) Proprietor: UD Trucks Corporation, Ageo-shi Saitama 362-8523 (JP)
(72) Inventor: YAMADA Yoshiaki, Ageo-shi Saitama 362-8523 (JP); TSUCHIYA Takayuki, Ageo-shi Saitama 362-8523 (JP); HIKIRI Kunihiko, Ageo-shi Saitama 362-8523 (JP)
(74) Representative: Dehns
(86) International application number: PCT/JP2010/069660
(87) International publication number: WO 2011/074345

(56) References cited:
- EP-A2- 0 916 546
- GB-A- 2 385 307
- JP-A- 11 098 601
- JP-A- 11 210 486
- JP-A- 2002 199 506
- JP-A- 2003 220 843
- US-A1- 2006 091 730
- US-A1- 2008 020 875
- US-A1- 2008 179 119
- US-A1- 2008 228 351
- US-A1- 2009 255 741

## Description

The present invention relates to a mechanism for driving various accessories in a hybrid vehicle (a hybrid electric vehicle) that may be traveled with driving force generated by an electric motor (a traveling motor) merely.

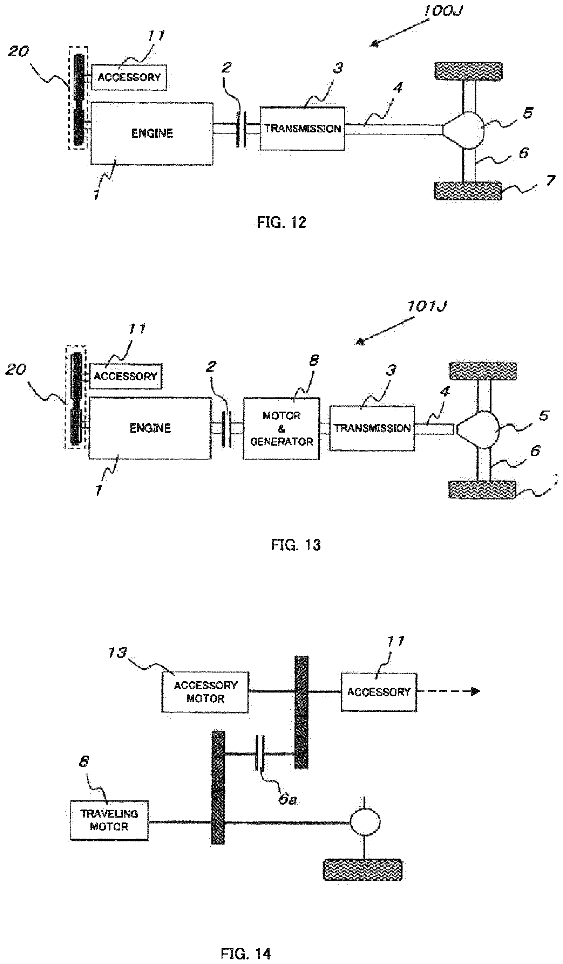

In a conventional vehicle 100J that is not a hybrid vehicle, as shown in FIG. 12, an accessory 11 is provided to an engine 11, and rotation of the engine 1 is used for driving the accessory 11 through a driving force transmitting mechanism 20.

In FIG. 12, the rotation of the engine 1 of the vehicle 100J is transmitted to a clutch 2, a transmission 3, a propeller shaft 4, a differential gear 5, a rear axle 6, and rear wheels 7, as the above-mentioned order.

In the example of FIG. 12, since an accessory driving source is the engine 1, the accessory does not operate in a case that the engine 1 is stopped, and there is an inconvenience that steering suddenly becomes heavy occurs, for example.

Even in a hybrid vehicle, in a case the vehicle is traveling, it is necessary to operate accessories, such as a pump driving a power steering (said pump is so-called "power steering pump"), a compressor supplying compressed air for a brake and others (said compressor is so-called "air compressor"), a compressor compressing a refrigerant in a vehicle air conditioner (said compressor is so-called "air-conditioner compressor"), and others, it is necessary to assure operations of various accessories.

In order to drive such accessories, for example, in a hybrid vehicle 101J shown in FIG. 13, an accessory 11 being provided to an engine 1 is driven by utilizing rotation force of the engine 1 through a driving force transmitting mechanism 20, as like as the conventional vehicle 100J shown in FIG. 12.

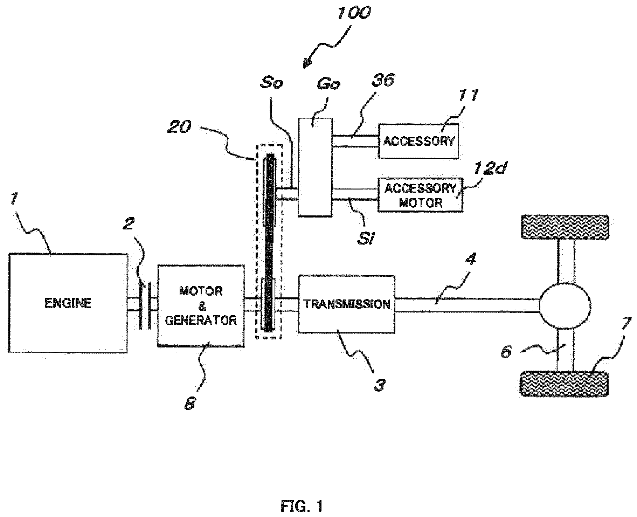

Reference numeral 8 in FIG. 13 denotes a motor which can operates as a generator also and is typical to a hybrid vehicle (said motor is described as a "traveling motor" hereinafter), the motor 8 is interposed between a clutch 2 and a transmission 3. Any other constructions are equal to those shown in FIG. 1.

According to the constructions shown in FIG. 13, in a case that a time period is short in which period the traveling motor 8 operates while the engine 1 is stopped, the engine 1 may be used as an accessory driving power transmitting mechanism and the accessory 11 may be operated by power of the traveling motor 8.

However, in case that the traveling time is prolonged in which time the traveling motor 8 operates, resistance loss in an idling of the engine 1 consumes a large amount of traveling motor driving energy. Therefore, in the example of FIG. 13, a degree of "improvement of fuel efficiency", as a primary object of the example, is relatively low.

Another prior art is proposed, for example, as shown in FIG. 14, in which an accessory 11 is driven by an accessory driving motor 12e and a traveling motor 8 (refer to Patent Document 1).

In the prior art in FIG. 14, although a construction is simple, in case that switching timing of a clutch 6a is inaccurate (the switching timing is messed up), it is highly possible that power interference of the traveling motor 8 and the accessory driving motor 12e is occurred, and that, the accessory driving motor 12e and/or a transmitting mechanism are damaged.

Furthermore, although operating conditions of a pump driving power steering (a power steering pump) and/or a compressor supplying compressed air (an air compressor) are greatly different from those of an air-conditioner compressor circulating a refrigerant in an air conditioner, such a difference in operating conditions is not taken into consideration and it is a problem.

According to a prior art shown in FIG. 15 (refer to Patent Document 1), an accessory driving system has double constructions.

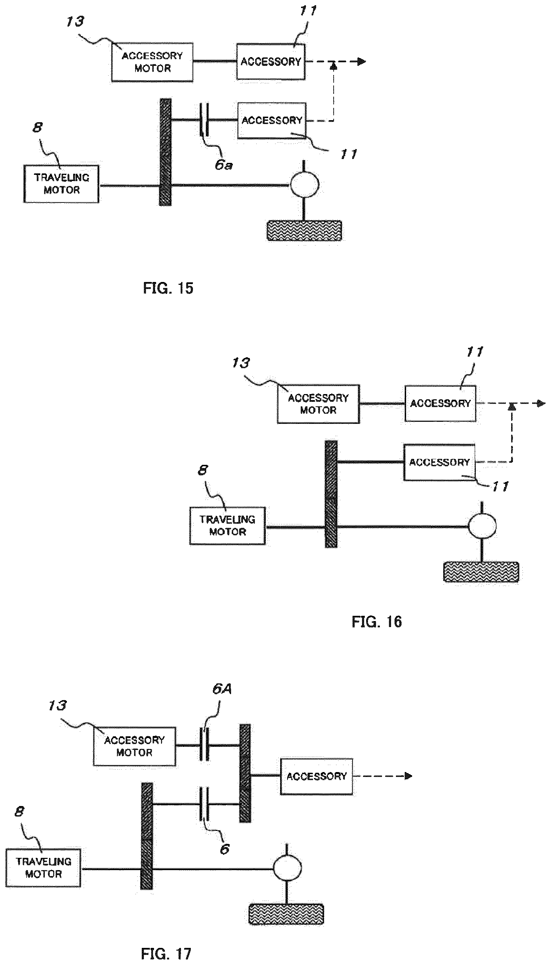

In the prior art shown in FIG. 15, since the power interference in the prior art shown in FIG. 14 does not occur, reliability thereof is relatively high.

However, since there are the double constructions in the accessory driving system thereof, there are problems that the constructions thereof are complicated and that an initial cost is expensive.

Further, there are not disclosures that operating conditions of the power steering pump and/or the air compressor are greatly different from those of the air-conditioner compressor.

In a prior art (refer to Patent Document 2) shown in FIG. 16, an accessory driving system has double constructions, as like as the prior art shown in FIG. 15.

Therefore, since the accessory driving system has the double constructions as like as the prior art shown in FIG. 16, there are problems that the constructions thereof are complicated and that an initial cost is expensive.

Furthermore, it is not solved that operating conditions of the power steering pump and/or the air compressor are greatly different from those of the air-conditioner compression.

In a prior art (see Patent Document 2) shown in FIG. 17, an accessory driving system has double constructions.

Therefore, there is not solution for problems that constructions thereof are complicated, the initial cost is expensive, and that operating conditions of the power steering pump and/or the air compressor are greatly different from those of the air-conditioner compressor.

US 2008/179119 teaches an accessory drive mechanism for a hybrid vehicle, wherein a drive power take-off mechanism, which takes out a power from a traveling drive system including an engine and a traveling motor by means of a wrapping-type transmission mechanism, is provided, an accessory is connected to the drive power take-off mechanism via a gearbox, an output shaft of the drive power take-off mechanism and an output shaft of an accessory driving motor are connected to the gearbox.
Patent Document 1: Japanese Patent No. 3611731
Patent Document 2: Japanese Patent No. 3685246

The present invention is provided in view of the above-described problems of the prior art, and an object of the present invention is to provide an accessory drive mechanism for a hybrid vehicle which can assure operations of accessories in any traveling conditions and can smoothly switch a driving power source of the accessory between a power being transmitted from a traveling motor and a power transmitted from an accessory driving motor.

An accessory drive mechanism for a hybrid vehicle according to the present invention comprises a drive power take-off mechanism which takes out power from a traveling drive system including an engine and a traveling motor by means of a wrapping-type transmission mechanism, an accessory (a power steering pump, an air compressor, an air compressor, or the like) is connected to the drive power take-off mechanism via a gearbox, an output shaft of the drive power take-off mechanism and an output shaft of an accessory driving motor (such as an accessory motor) are connected to the gearbox, a first braking device (such as clutch/brake mechanism on the traveling motor 8 side) is interposed in an output shaft of the drive power take-off mechanism, a second braking device (such as an accessory motor brake) is interposed in the output shaft of the accessory driving motor, the accessory drive mechanism comprises a revolution measurement device which measures a number of revolutions of the traveling drive system and a control device, a measurement result (such as the number of revolutions of the traveling drive system) of the revolution measurement device is input to the control device, and the control device has functions of stopping the accessory driving motor, operating the second braking device (such as effecting the braking device 18) and releasing the first braking device (such as releasing the brake and engaging the clutch in the clutch/brake mechanism 16) in a case that a number of revolutions transmitted from the traveling drive system is not lower than a predetermined number of revolutions (such as the low revolution being close to an engine idling speed of the engine) and functions of driving the accessory driving motor, operating the first braking device (such as effecting the brake and disengaging the clutch in the clutch/brake mechanism 16) and releasing the second braking device (such as loosening the braking device 18) in a case that a number of revolutions transmitted from the traveling drive system is lower than the predetermined number of revolutions.

Here, as the accessory, there may be a pump for driving a power steering (a so-called "power steering pump"), an engine lubricant pump, a compressor for supplying compressed air (a so-called "air compressor"), an air-conditioner compressor for compressing a refrigerant in an air conditioner (a so-called "air conditioner compressor"), and others.

Additionally, it is preferable that the output shaft of the drive power take-off mechanism and the output shaft of the accessory driving motor are coaxially arranged in the gearbox,
the gearbox comprises:
a ring gear including internal teeth therein and being provided at an output shaft end portion of the drive power take-off mechanism;
a plurality of planetary gears including external teeth which engage with the internal teeth of the ring gear;
a sun gear including external teeth which engage with the external teeth of the planetary gears; and
a planetary gear carrier connecting to rotation centers of the planetary gears and integrally revolving with revolution of the planetary gears along the external teeth of the sun gear,
the sun gear is provided at an output shaft end portion of the accessory driving motor,
the planetary gear carrier includes a rotating shaft being coaxial with the output shaft of the accessory driving motor and can rotate relatively to the output shaft of the accessory driving motor,
external teeth are formed on an outer edge portion in a radial direction of the planetary gear carrier,
a first gear that is externally engaged with the external teeth of the planetary gear carrier, and
a rotating shaft of the first gear is connected to a pump for driving power steering (the so-called "power steering pump) and a compressor for supplying compressed air (the so-called "air compressor").

Alternatively, it is preferable that the output shaft of the drive power take-off mechanism and the output shaft of the accessory driving motor are coaxially arranged in the gearbox, first and second pinion gears are provided to the output shaft of the drive power take-off mechanism and the output shaft of the accessory driving motor, respectively, a pair of third pinion gears which are externally engaged with each of a pair of first and second pinion gears respectively (which may be constructed by the first pinion gear 70 being provided to the output shaft So of the drive power take-off mechanism 20 and the second pinion gear 71 being provided to the output shaft 12 of the accessory driving motor 12e) are provided, the pair of third pinion gears include an identical rod-like member (which may be a rotating shaft for the pinion gears 72) as a rotation center, a ring gear is provided which includes external teeth formed thereon and rotates integrally with the rod-like member, a first gear is provided which is externally engaged with the external teeth of the ring gear, and a rotating shaft of the first gear is connected to a pump for driving the power steering (the so-called "power steering pump") and the compressor for supplying compressed air (the so-called "air compressor").

Further, it is preferable that a second gear being externally engaged with the first gear is provided, a rotating shaft of the second gear is connected to an air-conditioner compressor for compressing a refrigerant in an air conditioner (a so-called "air-conditioner compressor"), and that a clutch (such as an electromagnetic clutch 40) is interposed in the rotating shaft of the second gear.

In this case, it is preferable that a signal indicative of whether the air conditioner operates (the air-conditioner "ON/OFF" signal) is input to the control device, and that the control device has a function of disengaging the clutch in a case that the air conditioner does not operate (such as the air-conditioner "OFF" signal being input to the control device) and a function of engaging the clutch in a case that the air conditioner operates (such as the air-conditioner "ON" signal being input to the control device).

According to the present invention being constructed as mentioned above, since the accessory driving motor is provided, the power steering pump, the air compressor, and the air-conditioner compressor can be operated in a case that the hybrid vehicle travels by means of the traveling motor alone, in other words, in a case that a power generated by an internal-combustion engine is not transmitted to travel the hybrid vehicle, in various kinds of facilities or commercial districts for example.

Further, according to the present invention, the power transmitted from the traveling drive system (the internal-combustion engine or traveling motor side) and the power transmitted from the accessory driving motor can be easily and smoothly switched through the simple construction by operating and/or releasing the first braking device (the clutch/brake mechanism) and the second braking device.

Furthermore, the power transmitted from the traveling drive system and the power transmitted from the accessory driving motor do not interfere with each other, and then, a damage due to overload in the power transmitting system can be prevented.

Here, in the present invention, since the accessory driving motor is stopped and the second braking device operates in a case that the driving force should be transmitted from the traveling drive system (the internal-combustion engine or traveling motor side), the second braking device does not operate in a case that the accessory driving motor operates, and then, the accessory driving motor is not damaged.

On the other hand, in a case that the driving force should be transmitted from the accessory driving motor, the first braking device operates. Here, for example, in a case that the first braking device is constructed by the clutch/brake mechanism and that the brake operates and the clutch is disengaged in the clutch/brake mechanism when the first braking device is operated, the traveling drive system (the internal-combustion engine or traveling motor side) is not damaged.

That is, according to the present invention, an accessory power can be transmitted from the traveling drive system (the internal-combustion engine or traveling motor side), or it can be also transmitted from the accessory driving motor. Furthermore, members transmitting the driving force are prevented from damage, even though the first braking device and the second braking device operate.

Here, in a case that revolutions are converted into revolutions of the power transmitting system, since it is sufficient for the accessory driving motor to assure a number of revolutions, e.g. the number of revolutions being slightly higher than the number of revolutions corresponding to the low revolution which is close to the engine idling speed of the engine, electric power consumed in the accessory driving motor can be economized to low power.

As a result, according to the present invention, by simplifying the construction and the control, a reliability of the mechanism is improved and an introduction cost is reduced.

Further, in the present invention, in a case that it is constructed so as to input the signal indicating whether the air conditioner operates (the air-conditioner "ON/OFF" signal) to the control device, a power required for driving the air-conditioner accessory (the air-conditioner compressor for compressing the refrigerant in the air conditioner), which accessory operates or does not operate irrespective of the traveling condition, can be assuredly transmitted from the traveling drive system or accessory driving motor for the air-conditioner.
FIG. 1 is a block diagram of a first embodiment according to the present invention;
FIG. 2 is a block diagram showing a gearbox in the first embodiment;
FIG. 3 is a block diagram showing an operation of a clutch/brake mechanism;
FIG. 4 is a block diagram of a control device in the first embodiment;
FIG. 5 is a flowchart showing control in the first embodiment;
FIG. 6 is a drawing indicating the respective numbers of revolutions of a sun gear, a planetary gear carrier, and a ring gear when driven by a traveling motor;
FIG. 7 is a drawing indicating a state of torque of each gear in FIG. 6;
FIG. 8 is a drawing indicating the respective numbers of revolutions of the sun gear, the planetary gear carrier, and the ring gear when driven by an accessory driving motor;
FIG. 9 is a drawing indicating a state of torque of each gear in FIG. 8;
FIG. 10 is a block diagram showing a gearbox in a second embodiment;
FIG. 11 is a characteristic view showing an operation pattern of an accessory in the first embodiment;
FIG. 12 is a block diagram showing a prior art;
FIG. 13 is a block diagram showing a prior art different from a prior art shown in FIG. 12;
FIG. 14 is a block diagram showing a prior art different from those shown in FIGS. 12 and 13;
FIG. 15 is a block diagram showing another prior art;
FIG. 16 is a block diagram showing yet another prior art; and
FIG. 17 is a block diagram showing still another prior art.

An embodiment according to the present invention will now be described with reference to the accompanying drawings, and by way of example.

A description will be first given on a first embodiment.

In FIG. 1, an accessory drive mechanism for a hybrid vehicle denoted by reference numeral 100 as a whole has an engine 1, a traveling drive system, a drive power take-off mechanism 20, and an accessory system.

In FIG. 1, a clutch 2 is connected to an engine 1 as an internal-combustion engine. A traveling motor 8 is connected to the clutch 2.

Here, the traveling motor 8 also has an operation as an electric motor and an operation as an electric generator. That is, the traveling motor 8 operates as the electric generator at the time of traveling using the engine 1, and it operates as the electric motor at the time of traveling using the traveling motor 8.

A rear axle 6 is connected to the traveling motor 8 through a transmission 3 and a propeller shaft 4.

The drive power take-off mechanism 20 that takes out power using, e.g., a wrapping-type transmission mechanism is provided between the traveling motor 8 and the transmission 3. Here, the drive power take-off mechanism 20 is not restricted to the wrapping-type transmission mechanism, and a gear transmission or any other transmitting mechanism can be applied.

The drive power take-off mechanism 20 operates as an input device of the accessory drive mechanism designated by reference numeral 100 as a whole. The drive power take-off mechanism 20 is connected to a gearbox Go through an output shaft So.

A plurality of accessories 11 are connected to the gearbox Go through an output shaft 36. It is to be noted that the output shaft 36 is shown as a single shaft in FIG. 1 to simplify the drawing, and the plurality of accessories 11 are also represented as a single block.

An accessory driving motor 12d is connected to the gearbox Go through an output shaft Si.

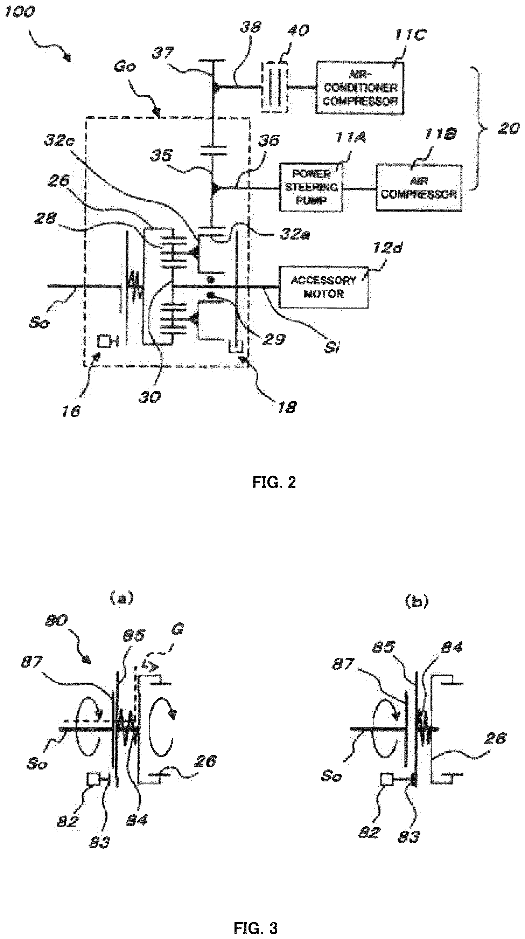

FIG. 2 shows particulars of the gearbox Go in the accessory drive mechanism 100.

In FIG. 2, a clutch/brake mechanism 16 (a first braking device) is disposed to the output shaft So of the drive power take-off mechanism 20. A ring gear 26 is disposed to the output shaft So at the rear (a side apart from the drive power take-off mechanism 20: the right side in FIG. 2) of the clutch/brake mechanism 16.

A plurality of planetary gears 28 are inscribed with respect to internal teeth of the ring gear 26. A sun gear 30 is externally engaged with the planetary gears 28.

The plurality of planetary gears 28 are supported by a planetary carrier 32 so as to allow their rotational movement. This planetary carrier 32 is provided concentrically with the sun gear 30 at the rear (the side apart from the drive power take-off mechanism 20: the right side in FIG. 2) of the sun gear 30.

A rotating shaft of the sun gear 30 is fixed to the output shaft Si, and the output shaft Si is connected to the accessory driving motor 12d. The planetary carrier 32 is disposed to the output shaft Si by a bearing 29 so as to allow its rotational movement.

Here, the output shaft Si and the output shaft So are concentrically arranged. Further, the output shaft Si and the output shaft So are constructed so as to enable relative rotation.

On the output shaft Si, a braking device 18 (a second braking device) is disposed in a region between the planetary carrier 32 and the accessory driving motor 12d. The second braking device 18 is a brake on the accessory driving motor 12e side.

A first gear 35 is externally engaged with a gear formed on an outer side edge portion 32a of the planetary carrier 32 in a radial direction (a vertical direction in FIG. 2) thereof. Furthermore, a rotating shaft 36 of the first gear 35 is coupled with the power steering pump 11A and the air compressor 11B in a so-called "tandem state".

Moreover, a second gear 37 is externally engaged with the first gear 35. Additionally, a rotating shaft 38 of the second gear 37 is coupled with the air-conditioner compressor 11C through an electromagnetic clutch 40.

Here, although not shown, the second gear 37 can be constructed so as to directly engage with the gear formed on the outer side edge portion 32a of the planetary carrier 32 in the radial direction.

The clutch/brake mechanism 16 disposed to the output shaft So will now be described with reference to FIG. 3.

As shown in FIG. 3(a), the clutch/brake mechanism 16 has a clutch 80, a brake actuator 82, and a spring 84.

The clutch 80 is provided with two face plates 85 and 87, and the face plate on the ring gear 26 side is denoted by reference numeral 85 in the illustrated embodiment. Additionally, the face plate 85 is coupled with the ring gear 26 side (the right side in FIG. 3) of the output shaft So, and the face plate 87 is coupled with a side of the output shaft So apart from the ring gear 26 (the drive power take-off mechanism 20 side: the left side in FIG. 3).

The brake actuator 82 has a function of expanding or contracting a rod 83 having a stopper member at an end thereof.

The spring 84 presses the face plate 85 on the ring gear 26 side against the opposed face plate 87.

In a state shown in FIG. 3(a), the clutch/brake mechanism 16 is "releasing" (the clutch is engaged to release the face plate 85 on the ring gear 26 side).

In this state, the brake actuator 82 contracts the rod 83, and hence the stopper member at the end of the rod 83 is not in contact with the face plate 85. Further, the face plate 85 is pressed against the face plate 87 by elastic repulsive force of the spring 84.

As a result, rotation of the output shaft So is transmitted to the ring gear 26 as indicated by an arrow G.

On the other hand, in a state depicted in FIG. 3(b), the clutch/brake mechanism 16 is "braking" (the clutch is released to brake the face plate 85 on the ring gear 26 side).

That is, in FIG. 3(b), the brake actuator 82 expands the rod 83 to bring the stopper member at the end of the rod 83 into contact with the face plate 85, thereby pressing the face plate 85 toward the ring gear 26 side (the right side in FIG. 3).

As a result, the face plate 85 moves toward the ring gear 26 side against the elastic repulsive force of the spring 84, and the face plate 85 and the face plate 87 are apart from each other. Therefore, the rotation of the output shaft So is interrupted between the face plate 85 and the face plate 87.

Furthermore, the rotation of the face plate 85 is braked by frictional resistance produced in a case that the stopper member at the end of the rod 83 comes into contact with the face plate 85. Therefore, the ring gear 26 is stopped (fixed).

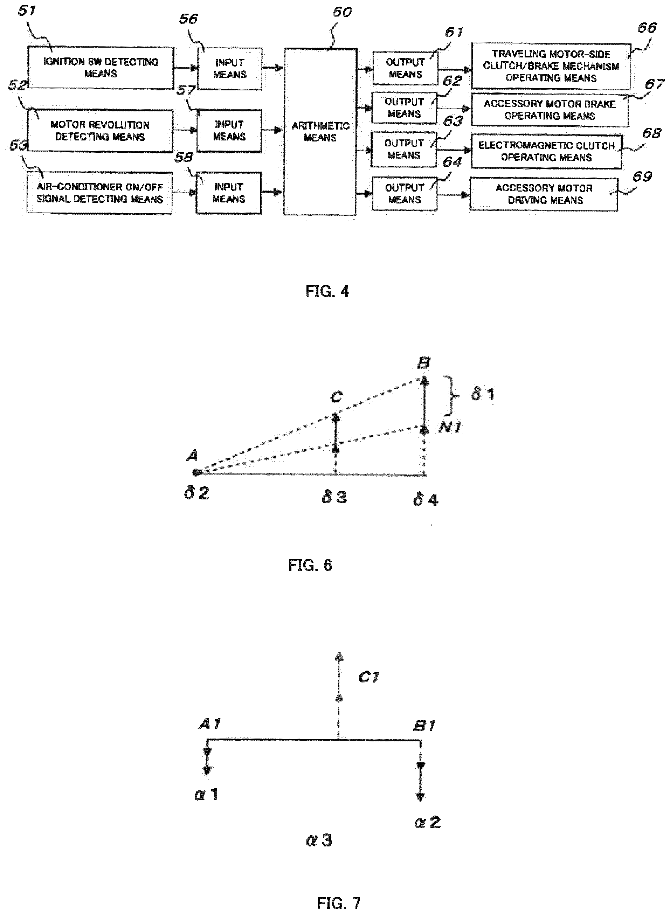

FIG. 4 shows a control mechanism for the accessory drive mechanism 100 according to the first embodiment.

In FIG. 4, the ignition switch detecting means 51, the traveling motor revolution detecting means 52, and the air-conditioner ON/OFF signal detecting means 53 are connected to the control device 60 through the respective input means 56, 57, and 58.

The control device 60 is connected to traveling motor-side clutch/brake mechanism operating means 66, accessory driving motor brake operating means 67, electromagnetic clutch operating means 68, and accessory driving motor driving means 69 through output means 61, 62, 63, and 64 based on signals from the respective input means 56, 57, and 58.

As a result, control signals "driving" and "stop" are transmitted to the accessory driving motor 12e, control signals "braking" (an operation of disengaging the clutch to brake the face plate 85 on the ring gear 26 side) and "releasing" (an operation of engaging the clutch to release the face plate 85 on the ring gear 26 side) are transmitted to the clutch/brake mechanism 16, control signals "braking" and "releasing" are transmitted to the second braking device 18, and control signals "engagement" and "disengagement" are transmitted to the electromagnetic clutch 40.

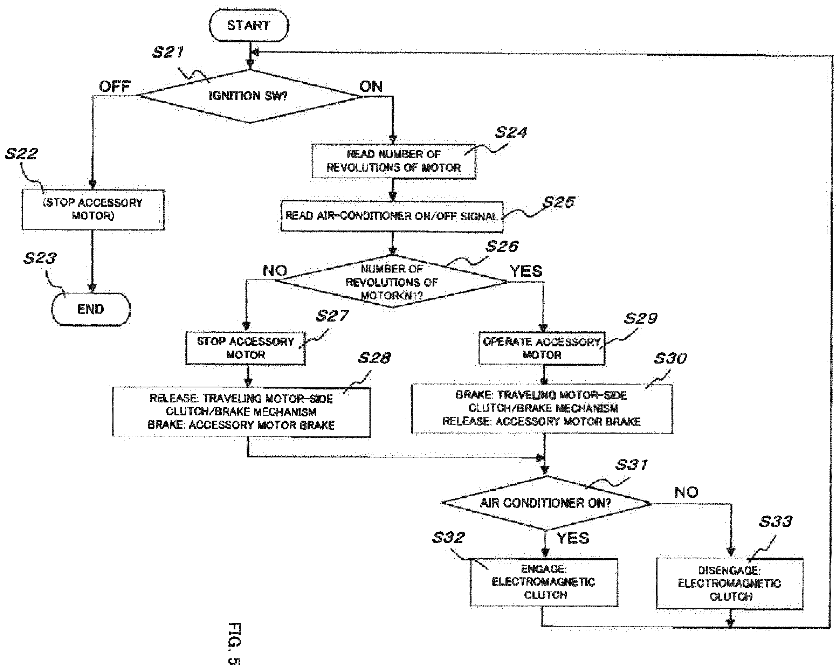

Control of the embodiment shown in FIG. 1 will now be described with reference to FIG. 5.

In FIG. 5, the ignition switch detecting means 51 determines whether the ignition switch is ON or OFF (a step S21) .

If the ignition switch is OFF (OFF at the step S21), since a hybrid vehicle is at a stop, the accessory driving motor 12e is stopped (a step S22) to terminate the control (a step S23).

At the step S21, if the ignition switch is ON (ON at the step S21), the processing advances to a step S24 where the traveling motor revolution detecting means 52 is used to read the number of revolutions of the traveling motor 8.

Then, an air-conditioner ON/OFF signal is read by the air-conditioner ON/OFF signal detecting means 53 (a step S25). Although not shown, the operation of reading the air-conditioner ON/OFF signal at the step S25 can be executed immediately before a later-described step S31.

Subsequently, a judgment is made upon whether the number of revolutions of the traveling motor 8 is lower than a predetermined number of revolutions (e.g., the number of revolutions that is 50 rpm higher than an engine idling speed of the engine 1) the number of revolutions N1 that is slightly higher than the engine idling speed of the engine (see FIG. 1) (a step S26).

If the number of revolutions of the traveling motor 8 is lower than the predetermined number of revolutions N1 (YES at the step S26), the accessory driving motor 12e is driven with the number of revolutions required for driving the power steering pump 11A and the air compressor 11B (a step S29).

Further, the clutch/brake mechanism 16, which is a brake on the traveling motor side, is braked, and the second braking device 18, which is a brake on the accessory driving motor side, is released (a step S30). As a result, the revolutions of the accessory driving motor 12e alone are transmitted to the power steering pump 11A and the air compressor 11B, and the revolutions from the traveling motor 8 (see FIG. 1) side are not transmitted to the same. After the step S30, the processing advances to a step S31.

On the other hand, at a step S26, if the number of revolutions of the traveling motor 8 is not lower than the predetermined number of revolutions N1 (NO at the step S26), the accessory driving motor 12e is stopped (a step S27).

Furthermore, the clutch/brake mechanism 16 on the traveling motor 8 side is released, and the second braking device 18 on the accessory driving motor 12e side is braked (a step S28). As a result, the revolutions from the traveling motor 8 (see FIG. 1) side alone are transmitted to the power steering pump 11A and the air compressor 11B, and the revolutions of the accessory driving motor 12e are not transmitted.

Since the transmission of the driving force is assured for the power steering pump 11A and the air compressor 11B at the steps S27, S28, S29, and S30, the operation is assuredly carried out as required. After the step S27, the processing advances to a step S31.

At the step S31, the air-conditioner ON/OFF signal is used to determine whether the air-conditioner compressor 11C is operated (ON) or not operated (OFF). If the air-conditioner compressor 11C is ON (YES at the step S31), the electromagnetic clutch 40 is engaged (a step S32) to transmit the revolutions from the traveling motor 8 (see FIG. 1) side or the revolutions from the accessory driving motor 12e to the air-conditioner compressor 11C. Moreover, the processing returns to the step S21.

If the air-conditioner compressor 11C is OFF (NO at the step S31), the electromagnetic clutch 40 is disengaged (a step S33) to prevent the revolutions from the traveling motor 8 or the accessory driving motor 12e from being transmitted to the air-conditioner compressor 11C. Additionally, the processing returns to the step S21.

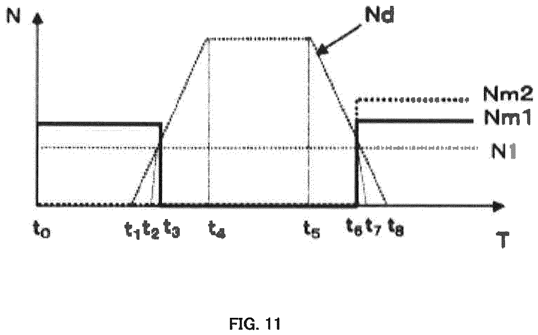

In the control shown in FIG. 5, a relationship between times and the numbers of revolutions of the respective motors, i.e., the traveling motor, the air-conditioner compressor motor, the power steering pump motor, and the air compressor motor is as shown in FIG. 11. Therefore, a description will be given hereinafter with reference to FIG. 11.

As shown in FIG. 11, in which an abscissa represents a time and an ordinate represents the number of revolutions of each motor, the number of revolutions of the traveling motor 8 is lower than the predetermined number of revolutions N1 immediately after start of a vehicle, and the power steering pump 11A and the air compressor 11B are driven by the accessory driving motor 12e as indicated by a solid line. Therefore, as characteristics indicated by the solid line in FIG. 11 (characteristics of the accessory driving motors 12e concerning the revolutions of the power steering pump 11A and the air compressor 11B), the number of revolutions of the traveling motor 8 rises as the number of revolutions slightly higher than the predetermined number of revolutions in a region where the number of revolutions of the traveling motor 8 is lower than the predetermined number of revolutions N1.

Here, in the example shown in FIG. 11, the air conditioner is not operated and the air-conditioner compressor 11C is not rotated in a state that the number of revolutions of the traveling motor 8 is not greater than the predetermined number of revolutions N1 immediately after start of the vehicle. Therefore, in the example shown in FIG. 11, as characteristics indicated by a bold dotted line (characteristics of the accessory driving motor 12e concerning the air-conditioner compressor 11C), the number of revolutions of the traveling motor 8 does not rise immediately after start of the vehicle in the region where the number of revolutions of the traveling motor 8 is lower than the predetermined number of revolutions N1.

In a case that the number of revolutions of the traveling motor 8 is higher than the predetermined number of revolutions N1, the power steering pump 11A, the air compressor 11B, or the air-conditioner compressor 11C is driven by the revolutions from the traveling motor 8 side, and the accessory driving motor 12e is stopped. Therefore, in a region where the number of revolutions of the traveling motor 8 is higher than the predetermined number of revolutions N1, as characteristics indicated by a solid line (characteristics of the accessory driving motor 12e concerning the revolutions of the power steering pump 11A or the air compressor 11B) and characteristics of a bold dotted line (characteristics of the accessory driving motor 12e concerning the revolutions of the air-conditioner compressor 11C), the number of revolutions is zero.

In a case that the number of revolutions of the traveling motor 8 is reduced to be lower than the predetermined number of revolutions N1, the power steering pump 11A, the air compressor 11B, and the air-conditioner compressor 11C are driven by the accessory driving motor 12e. Therefore, in FIG. 11, in a case that the number of revolutions of the traveling motor 8 is reduced to be lower than the predetermined number of revolutions N1, characteristics indicated by the solid line and the rough dotted line rise.

It is to be noted that the number of revolutions of the air-conditioner compressor is different from the number of revolutions of the power steering or air compressor is based on a difference in number of teeth between the first gear 35 and the second gear 37. The numbers of revolutions of both the members differ on a case-by-case basis.

FIG. 6 shows the respective numbers of revolutions of a sun gear 30 being as a driving gear in a case that they are driven by the traveling motor 8, a planetary gear carrier 32c, and a ring gear 26.

In FIG. 6, in a case that the traveling motor 8 is used to drive the accessory 11, the number of revolutions of the sun gear 30 driven by the accessory driving motor 12e is zero (A). In a case that the traveling motor 8 rotates at the predetermined number of revolutions N1 or above, the accessory 11 is driven by the traveling motor 8, and the number of revolutions of the ring gear 26 is (B). Further, the number of revolutions of the planetary gear carrier 32c for driving the accessory is (C).

In FIG. 6, reference character δ1 represents that "the accessory is driven by the traveling motor in a case that the traveling motor is equal to or above N1", reference character δ represents "the sun gear driven by the accessory motor", reference character δ3 represents "the accessory driving planetary gear carrier", and reference character δ4 represents "the ring gear driven by the traveling motor".

FIG. 7 shows a state of torque in FIG. 6. In FIG. 7, the second braking device 18 on the accessory driving motor side generates negative torque (A1), the ring gear 26 on the traveling motor 8 side is braked with negative torque (B1), and the planetary gear carrier 32c that drives the accessory 11 generates positive torque (C1).

In FIG. 7, reference character α1 denotes "accessory motor-side brake holding torque", reference character α2 designates the "ring gear driven by the traveling motor", and reference character α3 represents the "accessory driving planetary gear carrier".

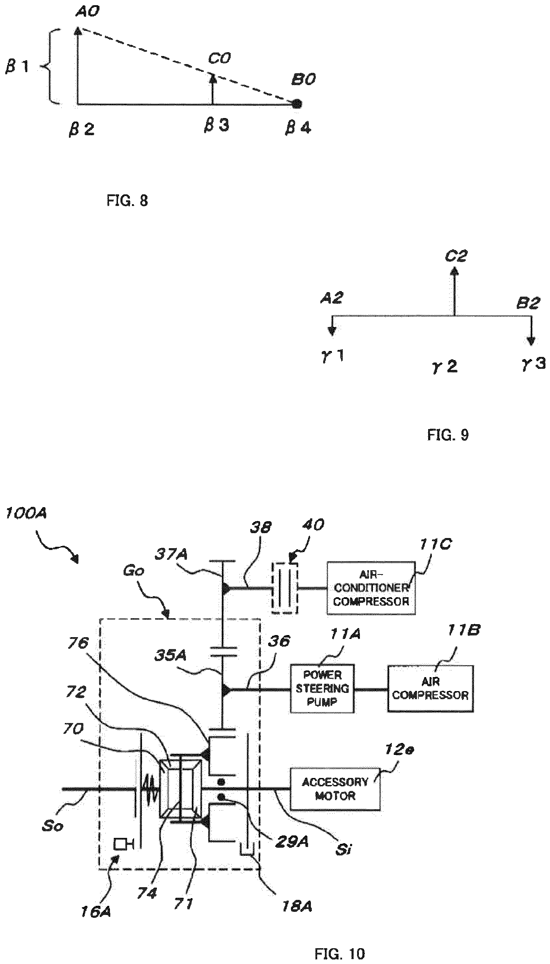

In FIG. 8, in a case that the accessories are driven by the accessory driving motor 12, the sun gear 30 as the driving gear does not rotate (A0), the ring gear 26 stops rotation (B0), and the number of revolutions of the planetary gear carrier 32c becomes (C0).

In FIG. 8, reference character β1 represents that "the accessory is driven by the accessory motor in a case that the traveling motor is equal to or below N1", reference character β2 represents "the sun gear driven by the accessory motor", reference character β3 represents "the accessory driving planetary ring", and reference character β4 represents "the ring gear driven by the traveling motor".

FIG. 9 shows a state of torque of each gear in FIG. 8. In FIG. 9, reference character γ1 represents that negative drive torque (A2) is generated by the second braking device 18 on the accessory driving motor 12e side, reference character γ3 represents that the ring gear 26 on the traveling motor 8 side is braked with negative torque (B2), and the planetary gear carrier 32c that drives the accessory 11 generates positive torque (C2) in a case that such an operation is effected, as shown in γ2.

According to the first embodiment having the above-described construction, for example, steering without driving can be carried out even if a vehicle velocity is substantially zero and the engine 1 is stopped, and the air conditioner can be operated even if the vehicle and the engine are stopped.

FIG. 10 shows a second embodiment according to the present invention.

In the second embodiment, a planetary gear mechanism used for a drive shaft of a vehicle is adopted as the gearbox Go in the first embodiment in FIG. 2, thereby reducing a size.

Since this type of planetary gear mechanism is used for drive shafts of a passenger car to a large-size truck, diverting device members of respective units results in large effect of cost reduction or maintenance.

In FIG. 10, parts different from FIG. 2 will be mainly explained hereinafter. It is to be noted that, in FIG. 10, like names and like reference numerals denote parts equal to those in FIG. 2.

In FIG. 10, drive power take-off mechanism 20 operates as an input device of an accessory drive mechanism according to the second embodiment, which is denoted by reference numeral 100A as a whole.

A clutch/brake mechanism 16A on a traveling motor 8 side is disposed to an output shaft So of the drive power take-off mechanism 20. Here, a construction or an operation of the clutch/brake mechanism 16A is the same as that of the clutch/brake mechanism 16 shown in FIG. 3.

On the output shaft So, a first pinion gear 70 as a bevel gear is disposed to a rear portion (a side part from the drive power take-off mechanism 20: the right side in FIG. 10) of the clutch/brake mechanism 16A.

A second pinion gear 71 as a bevel gear having the same diameter and the same number of teeth as the first pinion gear 70 is disposed on an output shaft 12 of an accessory driving motor 12e so as to face the first pinion gear 70. Here, the output shaft 12 is arranged on the same axis line as the output shaft So.

A plurality of third pinion gears 72 as small bevel gears engage between the first pinion gear 70 and the second pinion gear 71.

A rotating shaft 74 serving as the rotation center of the third pinion gears 72 is provided to pierce the plurality of third pinion gears 72, and the third pinion gears 72 are rotatably provided to the rotating shaft 74.

A ring gear 76 is disposed on the outer side of the rotating shaft 74 in a radial direction. Here, to clarify a gear train construction, in FIG. 10, the rotating shaft 74 and the ring gear 76 are represented as a construction that is offset in an axial line direction of the output shafts So and 12.

The rotation center of the ring gear 76 (placed on the inner side of the ring gear 76 in the radial direction) is rotatably disposed to the output shaft 12 through a bearing 29A.

On the output shaft 12, a braking device 18A as a brake on the accessory driving motor 12e is disposed between the bearing 29A and the accessory driving motor 12e.

A first gear 35A is externally engaged with external teeth of the ring gear 76. Moreover, a rotating shaft 36 of the first gear 35A is coupled with a power steering pump 11A and an air compressor 11B in a so-called "tandem state".

A second gear 37A is externally engaged with the first gear 35A. Additionally, a rotating shaft 38 of the second gear 37A is coupled with an air-conditioner compressor 11C.

Other constructions and effects of the second embodiment depicted in FIG. 10 are the same as those of the first embodiment.

### REFERENCE SIGNS LIST

1 ... engine
2 ... clutch
3 ... transmission
8 ... traveling motor
10 ... gearbox
11 ... accessory
11A ... power steering pump
11B ... air compressor
11C ... air-conditioner compressor
12 ... accessory driving motor
16, 16A ... clutch/brake mechanism (first braking device)
18, 18A ... braking device (second braking device)
20 ... drive power take-off mechanism
26 ... ring gear
28 ... planetary gear
30 ... sun gear
32c ... planetary gear carrier
35, 35A ... first gear
36 ... rotating shaft of the first gear
37, 37A ... second gear
38 ... rotating shaft of the second gear
40 ... (electromagnetic) clutch
51 ... ignition switch detecting means
52 ... motor revolution detecting means/motor revolution detecting sensor
53 ... air-conditioner ON/OFF switch
56 ... accessory driving motor driving means/power
steering/air compressor driving means
57 ... accessory driving motor driving means/air-conditioner compressor driving means
60 ... control device
70 ... first pinion gear
71 ... second pinion gear
74 ... rod-like member
76 ... ring gear
100 ... accessory drive mechanism for a hybrid
vehicle/accessory drive mechanism
So ... output shaft of the drive power take-off mechanism

## Claims

1. An accessory drive mechanism for a hybrid vehicle, wherein a drive power take-off mechanism (20), which takes out a power from a traveling drive system including an engine (1) and a traveling motor (8) by means of a wrapping-type transmission mechanism, is provided, an accessory (11) is connected to the drive power take-off mechanism (20) via a gearbox (Go), an output shaft (36) of the drive power take-off mechanism and an output shaft (12) of an accessory driving motor (12e) are connected to the gearbox;
**characterised in that**:
a first braking device (16) is interposed in an output shaft (So) of the drive power take-off mechanism, a second braking device (18) is interposed in the output shaft of the accessory driving motor, a revolution measurement device (52) which measures a number of revolutions of the traveling drive system and a control device (60) are provided, a measurement result of the revolution measurement device is input to the control device, and the control device has functions of stopping the accessory driving motor, operating the second braking device and releasing the first braking device in a case that a number of revolutions transmitted from the traveling drive system is not lower than a predetermined number of revolutions (N1) and functions of driving the accessory driving motor, operating the first braking device and releasing the second braking device in a case that a number of revolutions transmitted from the traveling drive system is lower than the predetermined number of revolutions.

2. The accessory drive mechanism for a hybrid vehicle according to claim 1, wherein the output shaft (So) of the drive power take-off mechanism (20) and the output shaft (12) of the accessory driving motor (12e) are coaxially arranged in the gearbox (Go), the gearbox comprises: a ring gear (26) including internal teeth therein and being provided at an output shaft end portion of the drive power take-off mechanism; a plurality of planetary gears (28) including external teeth which engage with the internal teeth of the ring gear; a sun gear (30) including external teeth which engage with the external teeth of the planetary gears; and a planetary gear carrier (32c) connecting to rotation centers of the planetary gears, the sun gear is provided at an output shaft end portion of the accessory driving motor (12e), the planetary gear carrier includes a rotating shaft which is coaxial with the output shaft of the accessory driving motor and can rotate relatively to the output shaft of the accessory driving motor, external teeth are formed on an outer edge portion (32a) in a radial direction of the planetary gear carrier (32c), the accessory drive mechanism includes a first gear (35) being externally engaged with the external teeth of the planetary gear carrier, and a rotating shaft of the first gear is connected to a pump (11A) for driving power steering and a compressor (11B) for supplying compressed air.

3. The accessory drive mechanism for a hybrid vehicle according to claim 1, wherein the output shaft (So) of the drive power take-off mechanism (20) and the output shaft (12) of the accessory driving motor (12e) are coaxially arranged in the gearbox (Go), first (70) and second (71) pinion gears are provided to the output shaft of the drive power take-off mechanism and the output shaft of the accessory driving motor, respectively, a pair of third pinion gears (72) which are externally engaged with the pair of first and second pinion gears are provided, the pair of third pinion gears include an identical rod-like member as a rotation center (74), a ring gear (76) is provided which includes external teeth formed thereon and integrally rotates with the rod-like member, a first gear (35A) is provided which is externally engaged with the external teeth of the ring gear (76), and a rotating shaft (36) of the first gear is connected to a pump (11A) for driving a power steering and a compressor (11B) for supplying compressed air.

4. The accessory drive mechanism for a hybrid vehicle according to any one of claims 2 and 3, wherein a second gear (37A) is provided which is externally engaged with the first gear (35A), a rotating shaft (38) of the second gear is connected to an air-conditioner compressor (11C) for compressing a refrigerant in an air conditioner, and a clutch (40) is interposed in the rotating shaft (38) of the second gear (37A).

5. The accessory drive mechanism for a hybrid vehicle according to claim 4, wherein a signal indicative of whether the air conditioner operates is input to the control device (60), and the control device has a function of disengaging the clutch (40) in a case that an air conditioner does not operate and a function of engaging the clutch in a case that the air conditioner operates.

## Patentansprüche

1. Hilfsantriebsmechanismus für ein Hybridfahrzeug, wobei ein Motorantriebs-Startleistungsmechanismus (20), der Kraft aus einem Wanderantriebssystem, das einen Motor (1) und einen Wandermotor (8) beinhaltet, mittels einem wickelartigen Getriebesystems herausnimmt, bereitgestellt ist, wobei ein Hilfsteil (11) mit dem Motorantriebs-Startleistungsmechanismus (20) über ein Getriebe (Go) verbunden ist, eine Abtriebswelle (36) des Motorantriebs-Startleistungsmechanismus und eine Abtriebswelle (12) eines Hilfsantriebsmotors (12e) mit dem Getriebe verbunden sind;
**dadurch gekennzeichnet, dass**:
eine erste Bremsvorrichtung (16) in einer Abtriebswelle (So) des Motorantriebs-Startleistungsmechanismus zwischengeschaltet ist, eine zweite Bremsvorrichtung (18) in der Abtriebswelle des Hilfsantriebsmotors zwischengeschaltet ist, eine Umdrehungsmessvorrichtung (52), die eine Anzahl von Umdrehungen des Wanderantriebssystems misst, und eine Steuerungsvorrichtung (60) bereitgestellt sind, wobei ein Messergebnis der Umdrehungsmessvorrichtung in die Steuervorrichtung eingegeben wird und die Steuerungsvorrichtung Funktionen des Stoppens des Hilfsantriebsmotors, des Betriebs der zweiten Bremsvorrichtung und des Lösens der ersten Bremsvorrichtung in einem Fall, bei dem eine Anzahl von Umdrehungen, die von dem Wanderantriebssystem übertragen wurde, nicht niedriger als eine vorbestimmte Anzahl von Umdrehungen (N1) beträgt, und Funktionen des Antriebs des Hilfsantriebsmotors, des Betriebs der ersten Bremsvorrichtung und des Lösens der zweiten Bremsvorrichtung in einem Fall, bei dem eine Anzahl von Umdrehungen, die von dem Wanderantriebssystem übertragen wurde, niedriger als die vorbestimmte Anzahl von Umdrehungen beträgt, aufweist.

2. Hilfsantriebsmechanismus für ein Hybridfahrzeug nach Anspruch 1, wobei die Abtriebswelle (So) des Motorantriebs-Startleistungsmechanismus (20) und die Abtriebswelle (12) des Hilfsantriebsmotors (12e) koaxial in dem Getriebe (Go) angeordnet sind, wobei das Getriebe Folgendes umfasst: einen Zahnkranz (26), der darin befindliche interne Zähne beinhaltet, und der an einem Abtriebswellen-Endabschnitt des Motorantriebs-Startleistungsmechanismus bereitgestellt ist; eine Vielzahl von Planetenrädern (28), die externe Zähne beinhaltet, die in die internen Zähne des Zahnkranzes eingreifen; ein Sonnenrad (30), das externe Zähne beinhaltet, die in die externen Zähne der Planetenräder eingreifen; und einen Planetenradträger (32c), der mit Drehmittelpunkten der Planetenräder verbunden ist, wobei das Sonnenrad an einem Abtriebswellen-Endabschnitt des Hilfsantriebsmotors (12e) bereitgestellt ist, wobei der Planetenradträger eine Drehwelle beinhaltet, die koaxial mit der Abtriebswelle des Hilfsantriebsmotors liegt und sich in Bezug auf die Abtriebswelle des Hilfsantriebsmotors drehen kann, wobei externe Zähne an einem äußeren Randabschnitt (32a) in einer radialen Richtung des Planetenradträgers (32c) gebildet sind, wobei der Hilfsantriebsmechanismus ein erstes Zahnrad (35) beinhaltet, das extern in die externen Zähne des Planetenradträgers eingreift, und wobei eine Drehwelle des ersten Zahnrads mit einer Pumpe (11A) zum Antrieb der Servolenkung und einem Kompressor (11B) zur Zufuhr von Druckluft verbunden ist.

3. Hilfsantriebsmechanismus für ein Hybridfahrzeug nach Anspruch 1, wobei die Abtriebswelle (So) des Motorantriebs-Startleistungsmechanismus (20) und die Abtriebswelle (12) des Hilfsantriebsmotors (12e) koaxial in dem Getriebe (Go) angeordnet sind, jeweils erste (70) und zweite (71) Ritzel an der Abtriebswelle des Motorantriebs-Startleistungsmechanismus und der Abtriebswelle des Hilfsantriebsmotors bereitgestellt sind, ein Paar von dritten Ritzeln (72), die extern in das Paar von ersten und zweiten Ritzeln eingreifen, bereitgestellt sind, wobei das Paar von dritten Ritzeln ein identisches stangenähnliches Element als ein Drehmittelpunkt (74) beinhaltet, ein Zahnkranz (76) bereitgestellt ist, der daran gebildete externe Zähne beinhaltet und sich integral mit dem stangenähnlichen Element dreht, ein erstes Zahnrad (35A) bereitgestellt ist, das extern in die externen Zähne des Zahnkranzes (76) eingreift, und eine Drehwelle (36) des ersten Zahnrads mit einer Pumpe (11A) zum Antrieb einer Servolenkung und einem Kompressor (11B) zur Zufuhr von Druckluft verbunden ist.

4. Hilfsantriebsmechanismus für ein Hybridfahrzeug nach einem der Ansprüche 2 und 3, wobei ein zweites Zahnrad (37A) bereitgestellt ist, das extern in das erste Zahnrad (35A) eingreift, eine Drehwelle (38) des zweiten Zahnrads mit einem Klimaanlagen-Kompressor (11C) zum Verdichten eines Kältemittels in einer Klimaanlage verbunden ist und eine Kupplung (40) in der Drehwelle (38) des zweiten Zahnrads (37A) zwischengeschaltet ist.

5. Hilfsantriebsmechanismus für ein Hybridfahrzeug nach Anspruch 4, wobei ein Signal, das anzeigt, ob die Klimaanlage in Betrieb ist, in die Steuerungsvorrichtung (60) eingegeben wird und die Steuerungsvorrichtung eine Funktion des Auskuppelns der Kupplung (40) in einem Fall, bei dem eine Klimaanlage nicht betriebsfähig ist, und eine Funktion des Kuppelns der Kupplung in einem Fall, bei dem die Klimaanlage betriebsfähig ist, aufweist.

## Revendications

1. Mécanisme d'entraînement d'accessoire pour un véhicule hybride, dans lequel est prévu un mécanisme de prise de force d'entraînement (20), qui prend une puissance d'un système d'entraînement de déplacement incluant un moteur (1) et un moteur de déplacement (8) à l'aide d'un mécanisme de transmission de type enroulement, un accessoire (11) est relié au mécanisme de prise de force d'entraînement (20) par l'intermédiaire d'une boîte à engrenages (Go), un arbre de sortie (36) du mécanisme de prise de force d'entraînement et un arbre de sortie (12) d'un moteur d'entraînement d'accessoire (12e) sont reliés à la boîte à engrenages ;
**caractérisé en ce que** :
un premier dispositif de freinage (16) est interposé dans un arbre de sortie (So) du mécanisme de prise de force d'entraînement, un deuxième dispositif de freinage (18) est interposé dans l'arbre de sortie du moteur d'entraînement d'accessoire, un dispositif de mesure de révolution (52) qui mesure un nombre de révolutions du système d'entraînement de déplacement et un dispositif de commande (60) sont prévus, un résultat de mesure du dispositif de mesure de révolution est entré dans le dispositif de commande, et le dispositif de commande présente des fonctions d'arrêt du moteur d'entraînement d'accessoire, d'actionnement du deuxième dispositif de freinage et de relâchement du premier dispositif de freinage dans un cas où un nombre de révolutions transmis à partir du système d'entraînement de déplacement n'est pas inférieur à un nombre prédéterminé de révolutions (N1) et des fonctions d'entraînement du moteur d'entraînement d'accessoire, d'actionnement du premier dispositif de freinage et de relâchement du deuxième dispositif de freinage dans un cas où un nombre de révolutions transmis à partir du système d'entraînement de déplacement est inférieur au nombre prédéterminé de révolutions.

2. Mécanisme d'entraînement d'accessoire pour un véhicule hybride selon la revendication 1, dans lequel l'arbre de sortie (So) du mécanisme de prise de force d'entraînement (20) et l'arbre de sortie (12) du moteur d'entraînement d'accessoire (12e) sont agencés coaxialement dans la boîte à engrenages (Go), la boîte à engrenages comprenant : une couronne dentée (26) incluant des dents internes dans celle-ci et étant disposée au niveau d'une partie d'extrémité d'arbre de sortie du mécanisme de prise de force d'entraînement; une pluralité de satellites (28) incluant des dents externes qui viennent en prise avec les dents internes de la couronne dentée ; un planétaire (30) incluant des dents externes qui viennent en prise avec les dents externes des satellites ; et un porte-satellite (32c) relié à des centres de rotation des satellites, le planétaire est disposé au niveau d'une partie d'extrémité d'arbre de sortie du moteur d'entraînement d'accessoire (12e), le porte-satellite inclut un arbre rotatif qui est coaxial avec l'arbre de sortie du moteur d'entraînement d'accessoire et peut tourner par rapport à l'arbre de sortie du moteur d'entraînement d'accessoire, des dents externes sont formées sur une partie bord extérieur (32a) dans une direction radiale du porte-satellite (32c), le mécanisme d'entraînement d'accessoire inclut un premier engrenage (35) qui est extérieurement en prise avec les dents externes du porte-satellite, et un arbre rotatif du premier engrenage est relié à une pompe (11A) pour entraîner une direction assistée et un compresseur (11B) pour apporter de l'air comprimé.

3. Mécanisme d'entraînement d'accessoire pour un véhicule hybride selon la revendication 1, dans lequel l'arbre de sortie (So) du mécanisme de prise de force d'entraînement (20) et l'arbre de sortie (12) du moteur d'entraînement d'accessoire (12e) sont agencés coaxialement dans la boîte à engrenages (Go), des premier (70) et deuxième (71) engrenages à pignons sont respectivement disposés sur l'arbre de sortie du mécanisme de prise de force d'entraînement et l'arbre de sortie du moteur d'entraînement d'accessoire, une paire de troisièmes engrenages à pignons (72) qui sont extérieurement en prise avec la paire de premier et deuxième engrenages à pignons est prévue, la paire de troisièmes engrenages à pignons inclut un organe de type tige identique comme centre de rotation (74), une couronne dentée (76) est prévue, laquelle inclut des dents externes formées sur celle-ci et tourne d'un seul tenant avec l'élément de type tige, un premier engrenage (35A) est prévu, lequel est extérieurement en prise avec les dents externes de la couronne dentée (76), et un arbre rotatif (36) du premier engrenage est relié à une pompe (11A) pour entraîner une direction assistée et un compresseur (11B) pour apporter de l'air comprimé.

4. Mécanisme d'entraînement d'accessoire pour un véhicule hybride selon l'une quelconque des revendications 2 et 3, dans lequel un deuxième engrenage (37A) est prévu, lequel est extérieurement en prise avec le premier engrenage (35A), un arbre rotatif (38) du deuxième engrenage est relié à un compresseur de climatiseur (11C) pour comprimer un fluide frigorigène dans un climatiseur, et un embrayage (40) est interposé dans l'arbre rotatif (38) du deuxième engrenage (37A).

5. Mécanisme d'entraînement d'accessoire pour un véhicule hybride selon la revendication 4, dans lequel un signal indiquant si le climatiseur fonctionne est entré dans le dispositif de commande (60), et le dispositif de commande a une fonction de désolidarisation de l'embrayage (40) dans un cas où un climatiseur ne fonctionne pas et une fonction de mise en prise de l'embrayage dans un cas où le climatiseur fonctionne.
